# EUROPEAN PATENT APPLICATION

(11) **EP 4 756 180 A1**
(43) Date of publication of application: **10.06.2026**
(21) Application number: 25220334.4
(22) Date of filing: 03.12.2025
(51) Int. Cl.: F01D 5/28, F01D 5/00, B08B 3/08, C23G 1/10

(54) **METHODS FOR COATING REMOVAL**

(30) Priority: 04.12.2024 US 202418968774
(71) Applicant: General Electric Company, Cincinnati, Ohio 45215 (US)
(72) Inventor: PROCHASKA, Stephanie Orfali, Niskayuna, 12309-1027 (US); VOZAR, Andrea Lena, Niskayuna, 12309-1027 (US); MAZURKIEWICZ-MONTGOMERY, Bernadetta, Niskayuna, 12309-1027 (US)
(74) Representative: Openshaw & Co.

(57) **Abstract**

Provided herein are compositions and methods for removing a coating, such as an environmental barrier coating (EBC), from a substrate. By some approaches, a method for removing a coating from a substrate comprises contacting the coating with a salt, the salt being a solid. The method also involves heating the coating and the salt to a temperature at or above the melting point of the salt to convert the coating to a dissolvable reaction product by fusion of the coating with the salt. After forming the dissolvable reaction product, the product is then dissolved using an acid to remove at least a portion of the coating from the substrate.

## Description

### TECHNICAL FIELD

These teachings relate generally to compositions and methods for removing a coating from a substrate.

### BACKGROUND

Gas turbine engines may be subjected to high operating temperatures. Components that are exposed to these high operating temperatures often include protective coatings. For example, turbine blades and turbine vanes, may include one or more coating layers that protect the component and thereby enhance durability of the component under harsh operating conditions. Environmental barrier coatings (EBCs) are one type of protective coating that can be applied to components subjected to high temperatures. EBCs protect components from attack by reactive species, such as high temperature water vapor.

With the use of EBCs, as part of component maintenance, the EBCs may need to be removed from a component and replaced. For example, when a layer of an EBC is damaged during engine operation, the EBC may be removed and replaced. In addition, an EBC may need to be removed from a component during component manufacturing, for example, to address coating defects or damage. Thus, methods for removing environmental barrier coatings may be desirable.

### BRIEF DESCRIPTION OF DRAWINGS

Various needs are at least partially met through provision of the compositions and methods for coating removal described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a flow diagram of a method for removing a coating from a substrate;
FIG. 2 is a table including the compositions of experimental coupons;
FIGS. 3A, 3B, and 3C are images of a coupon (Coupon A) that comprises an air plasma spray (APS) environmental barrier coating (EBC) with no substrate;
FIG. 4 is a table including experimental results, referred to in Example 1;
FIG. 5 is a table including experimental results, referred to in Example 1;
FIGS. 6A and 6B are images of a coupon (Coupon A) that comprises an air plasma spray (APS) environmental barrier coating (EBC) with no substrate;
FIG. 7 is a table including experimental results, referred to in Example 2; and
FIG. 8 is a table including experimental results, referred to in Example 2.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The compositions and methods for coating removal described herein may be used to remove environmental barrier coatings (EBCs) from a substrate. The approaches described herein involve the reaction or fusion of coatings with molten salts. The salts may be pyrosulfates or tetraborate, which convert oxides present in EBCs, to sulfates or other dissolvable reaction products. After converting the coating to a dissolvable reaction product via a fusion reaction between the coating and a molten salt, an acid can be used to digest or dissolve the dissolvable reaction product, thereby stripping the coating from the substrate. The compositions and methods for coating removal can be used to strip a coating from an EBC substrate, for example, before recoating or repair of the substrate.

The compositions and methods for coating removal described herein can be used on a variety of coatings, with one exemplary group of coatings being EBCs. EBCs can be comprised of a single or multiple layers of materials. Each layer may be composed of a single or multiple chemical compositions. EBC materials include, but are not limited to, rare earth (RE)-disilicates; rare earth (RE)-monosilicates; alkaline earth (AE) aluminosilicates (AEAl₂Si₂O₈); aluminum silicate or mullite (Al₆Si₂O₁₃); zirconium silicate (ZrSiO₄), hafnium silicate (HfSiO₄); compounds having the formula MₓHf_{y}O_{z}; compounds having the formula (MₓSi_{y}); silicon nitride (Si₃N₄); silicon carbide (SiC); ceramics based on the elements silicon, aluminum, oxygen, and nitrogen (SiAlON); compounds having the formula (SiₓC_{y}N_{z}O); oxide composites; and non-oxide composites. Rare earth elements include cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Alkaline earth elements include strontium (Sr), barium (Ba), and radium (Ra). An example of an alkaline earth aluminosilicate is Ba_{0.75}Sr_{0.25}Al₂Si₂O₈ (BSAS). In the above formulas M is a rare earth element, hafnium (Hf), titanium (Ti), or tantalum (Ta). In some examples, the EBCs referred to herein do not include zirconia based ceramic coatings.

The compositions and methods for coating removal described herein may be used to remove coatings from a variety of substrates. In some examples, the substrate is a ceramic matrix composite (CMC). In some examples, the CMC may be a silicon carbide (SiC) material. CMCs may include, but are not limited to, CMCs with a silicon carbide matrix and silicon carbide fiber (when made by silicon melt infiltration, this matrix will contain residual free silicon); silicon carbide/silicon matrix mixture and silicon carbide fiber; silicon-carbide-fiber-reinforced silicon carbide (SiC/SiC); oxide-oxide CMCs may be comprised of a matrix and reinforcing fibers comprising oxide-based materials such as silicon dioxide (SiO₂), aluminosilicates, and mixtures thereof; carbon-fiber-reinforced carbon (C/C); and carbon-fiber-reinforced silicon carbide (C/SiC).

In addition, the substate on which the coating is applied may be in many forms. In some approaches, the substrate may be a component or a portion thereof. In some embodiments, the component is a component subjected to harsh operating conditions such as high temperatures, supersonic speeds, intense stress, or severe oxidation. In some embodiments, the component is a component that is incorporated in at least one of a turbine, an aeroengine, an aerospace application, a hypersonic application, or a space application. For example, the component may be a component of a turbine (e.g., a blade, a vane, a shroud) or an aeroengine (e.g., a stator vane, a rotor blade, a liner, a combustor, a nozzle, etc.). Aerospace applications include but are not limited to applications relating to aircrafts, spacecraft, propulsion systems, satellites, etc. Hypersonic applications include but are not limited to applications related to hypersonic vehicles, propulsion systems, etc. Space applications include but are not limited to applications relating to vehicles and propulsion systems that can be launched into space. It is contemplated that the component can be any engine part or structural component in an aerospace, hypersonic, or space application.

Traditional approaches for removing EBC coatings from a substrate involve mechanical approaches such as grit blasting. Such mechanical approaches may mechanically damage the underlying substrate. When the underlying substrate (e.g., a component) is damaged with coating removal, the substrate may have to be subsequently repaired and/or replaced, which adds costs. Further, mechanical approaches such as grit blasting are often labor-intensive and are performed by a skilled operator, which further increases time and costs associated with repair of the coating.

Advantageously, the compositions and methods for coating removal described herein may be used to chemically remove a coating, such as an EBC, from a substrate. Thus, it may be possible to avoid exposing the component to aggressive mechanical media for coating removal to help prevent or reduce damage to the substrate underlying the coating. The chemical approaches generally involve a fusion reaction with a salt to convert the coating to a dissolvable reaction product. The dissolvable reaction product can then be exposed to an acid to dissolve the dissolvable reaction product. These chemical approaches are less labor-intensive as the process is more hands-off, involving submerging or coating the component with the salt and/or the acid.

Further, the compositions and methods for coating removal described herein may be used in conjunction with mechanical abrasion. Using the approaches described herein, it may be possible to weaken a coating prior to mechanical abrasion, thereby allowing for the use less aggressive media for mechanical removal. The use of less aggressive media for mechanical removal may reduce the damage to the underlying substrate during the coating removal process.

### Compositions

The compositions used for coating removal include a salt that is contacted with the coating to form a dissolvable reaction product via reaction or fusion and an acid that is used to dissolve the dissolvable reaction product.

The salt may be any suitable salt. In some approaches, the salt is a solid. For example, the salt may be a particulate solid. The composition of the salt may depend on the particular coating to be removed. In some examples, the salt may be a pyrosulfate or a tetraborate. In some examples, the salt includes at least one of sodium pyrosulfate (Na₂S₂O₇), potassium pyrosulfate (K₂S₂O₇), sodium bisulfate (NaHSO₄), potassium bisulfate (KHSO₄), sodium hydroxide (NaOH), potassium hydroxide (KOH), sodium carbonate (Na₂CO₃), potassium carbonates (K₂CO₃), sodium peroxide (Na₂O₂), boric acid (H₃BO₃), sodium tetraborate (Na₂B₄O₇), lithium tetraborate (Li₂B₄O₇), lithium metaborate (LiBO₂), ammonium bifluoride (NH₄HF₂), sodium fluoride (NaF), potassium fluoride (KF), or potassium bifluoride (KHF₂). In some examples, when the coating is an EBC, the salt includes at least one of sodium pyrosulfate (Na₂S₂O₇), potassium pyrosulfate (K₂S₂O₇), sodium bisulfate (NaHSO₄), potassium bisulfate (and KHSO₄), sodium hydroxide (NaOH), potassium hydroxide (KOH), sodium carbonate (Na₂CO₃), potassium carbonates (K₂CO₃), sodium tetraborate (Na₂B₄O₇), lithium tetraborate (Li₂B₄O₇), lithium metaborate (LiBO₂), ammonium bifluoride (NH₄HF₂), sodium fluoride (NaF), potassium fluoride (KF), or potassium bifluoride (KHF₂). In some examples, the salt includes at least one of potassium bisulfate (and KHSO₄) and lithium tetraborate (Li₂B₄O₇). In yet other examples, the salt is selected from the group consisting of potassium bisulfate (KHSO₄), lithium tetraborate (Li₂B₄O₇), and mixtures thereof. In some embodiments, when the coating is a TBC, the salt includes at least one of sodium hydroxide (NaOH), potassium hydroxide (KOH), sodium carbonate (Na₂CO₃), or potassium carbonate (K₂CO₃).

In some aspects, the salt may be selected based on the composition of the substrate that is underlying the coating to be removed. For example, salts such as pyrosulfates or tetraborates may be suitable for targeting coatings disposed on CMC substrates, as such salts would not form fusions with silica and/or silicates.

In some aspects, the melting point of the salt is such that the coating (e.g., a target coating to be removed) dissolves into or is soluble in the salt at the melting point. In some aspects, the melting point of the salt is such that it is less than the melting point of the substrate. In some aspects, the melting point of the salt may be in the range of about 100 degrees Celsius and about 1650 degrees Celsius, about 100 degrees Celsius and about 1350 degrees Celsius, or about 100 degrees Celsius and about 1200 degrees Celsius.

The acid may be any acid suitable to dissolve or digest a reaction product of the salt and the coating. In some approaches, the acid is a strong acid. In certain approaches, the acid is at least one of nitric acid or hydrochloric acid.

The acid has a pH of less than or equal to 7, less than or equal to about 3, and, in some approaches, has a pH of less than or equal to about 1.

The acid may be an aqueous solution. In some approaches, the acid is an aqueous solution having an acid concentration in the range of about 5% and about 70%, about 20% and about 70%, about 5% and about 50%, about 5% and about 30%, or about 5% and about 20%, by weight.

### Methods

The methods for coating removal described herein may use one or more of the compositions described herein. In particular, the methods may use the compositions described herein to remove coatings such as EBCs or thermal barrier coatings (TBCs) from a substrate. The substrate may be a component. In some embodiments, the component is a component subjected to harsh operating conditions such as high temperatures, supersonic speeds, intense stress, or severe oxidation. In some embodiments, the component is a component that is incorporated in at least one of a turbine, an aeroengine, an aerospace application, a hypersonic application, or a space application. For example, the component may be a component of a turbine (e.g., a blade, a vane, a shroud) or an aeroengine (e.g., a stator vane, a rotor blade, a liner, a combustor, a nozzle, etc.). Aerospace applications include but are not limited to applications relating to aircrafts, spacecraft, propulsion systems, satellites, etc. Hypersonic applications include but are not limited to applications related to hypersonic vehicles, propulsion systems, etc. Space applications include but are not limited to applications relating to vehicles and propulsion systems that can be launched into space. It is contemplated that the component can be any engine part or structural component in an aerospace, hypersonic, or space application. In some aspects, the substrate comprises a CMC.

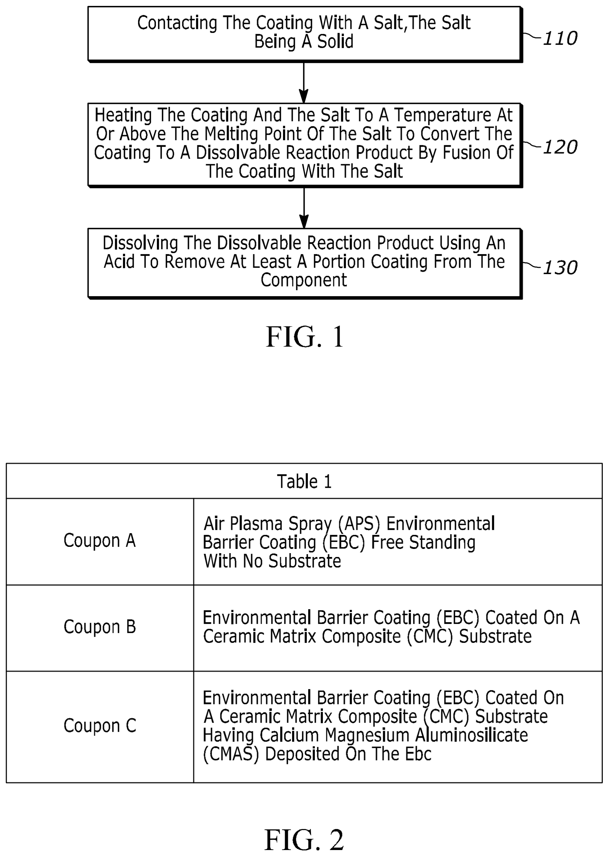

An exemplary method for removing a coating from a substrate is illustrated in FIG. 1. At block 110, the method includes contacting the coating with a salt. In some approaches, the salt is a solid. In certain approaches, the salt is a particulate solid. Using a particulate solid may increase the surface area of the salt so that more the salt is exposed to the coating, increasing the rate of reaction.

In some approaches, a ratio of the salt to the coating may be about 6:1 to about 20:1, about 6:1 to about 12:1, about 8:1 to about 12:1, or, in some aspects, about 10:1 by weight.

The coating may be an environmental barrier coating (EBC). The EBC can be fabricated in any suitable manner. In some embodiments, the EBC is fabricated using a thermal spray method. In other embodiments, the EBC is fabricated using a slurry-based process. In other embodiments, the EBC is fabricated using a physical vapor deposition process, including but not limited to electron beam physical vapor (EBPVD) and plasma spray physical vapor deposition (PSPVD). In yet other embodiments, the EBC is fabricated using sputtering techniques, including but not limited to magnetron sputtering, RF sputtering, diode sputtering, or reactive sputtering. Thermal spray methods that can be used to fabricate the EBC include but are not limited to air plasma spraying (APS), very low-pressure plasma spraying (VLPPS), suspension plasma spraying (SPS), high velocity oxygen fuel (HVOF) spraying, solution precursor plasma spray (SPPS), and high velocity air fuel (HVAF) spraying. APS involves generating a high temperature plasma jet to melt and accelerate fine powder particles towards a substrate. VLPPS involves spraying materials at low chamber pressures, which allows for the formation of fine molten droplets or vapor phase deposition. SPS involves injecting a liquid suspension containing fine powder particles into a plasma jet, where the liquid rapidly evaporates, and the particles melt before being deposited onto a substrate. HVOF spraying involves combusting a mixture of fuel and oxygen to create a high-pressure jet, which propels powder at supersonic speeds towards a substrate. SPPS involves injecting a liquid precursor solution containing dissolved compounds into a high-temperature plasma jet. As the solution enters the plasma, it rapidly evaporates and undergoes thermal decomposition, forming the fine oxide particles or droplets which are propelled towards a substrate. HVAF spraying involves using compressed air to combust fuel, creating a high-speed jet of hot gases that propels powder particles towards a substrate at high velocities. Such thermal spray methods are exemplary and the EBC fabrication methods are not limited to those listed or to thermal spray techniques. In some examples, the EBC is at least one of an air plasma sprayed (APS) or a slurry-based EBC.

The EBC can also be fabricated using one or more sintering aids. For example, one or more sintering aids may be involved in any of the aforementioned fabrication techniques (e.g., thermal spray process, slurry-based process, physical vapor deposition processes, or sputtering processes).

In some approaches, the coating is an EBC comprising rare earth silicates and/or rare earth oxides. In other approaches, the coating may be an EBC comprising refractory metals such as hafnium (Hf), zirconium (Zr), etc. In other approaches, the coating is a TBC such as a yttria-stabilized coating (e.g., yttria-stabilized zirconia).

In some examples, the coating may be covered with the salt to form a covered coating and the covered coating is heated to a temperature at or above the melting point of the salt. For example, a particulate solid salt may be spread onto the coating to cover the coating before heating the salt and coating, as described at block 120. In some examples, the salt may be in the form of a tape, with the salt disposed on one side of the tape such that it may be stuck to the coating.

At block 120, the coating and the salt are heated to a temperature at or above the melting point of the salt to convert the coating to a dissolvable reaction product by fusion of the coating with the salt. For example, the coating and the salt may be heated using a furnace, oil bath, burner or hot plate. In some aspects, the coating and the salt are placed in a crucible and the crucible is placed in the furnace. At such temperatures, the salt becomes molten and the coating reacts with the molten salt in a fusion reaction to form the dissolvable reaction product.

In some approaches, the coating and the salt are heated to a temperature in the range of about 100 degrees Celsius and about 1650 degrees Celsius, about 100 degrees Celsius and about 1350 degrees Celsius, or about 100 degrees Celsius and about 1200 degrees Celsius.

In some approaches, the coating and the salt are heated to a temperature at or above the melting point of the salt for an amount of time in the range of about 0.5 hours to about 4 hours. Heating for times in these ranges may allow sufficient time for the fusion reaction to complete. The amount of time may depend, for example, on the amount of salt and the amount of coating available to react. The salt may be the limiting reagent so when the salt is completely reacted or exhausted, additional time would not equate to additional coating removal.

The composition of dissolvable reaction product depends on the salt used and the composition of the coating. In some examples, when the salt is a pyrosulfate or a tetraborate, the dissolvable reaction product is a sulfate.

At block 130, after converting the coating to a dissolvable reaction product, the dissolvable reaction product is dissolved using an acid. To dissolve the dissolvable reaction product, the dissolvable reaction product is contacted with the acid. For example, the acid may be poured into the crucible containing the coating, sprayed on the coating, or the coating may be submerged in an acid bath. Dissolving the dissolvable reaction product with the acid removes the dissolvable reaction product. In converting the coating to the dissolvable reaction product, part or an entirety of the coating fuses with the salt to form a glass-like fusion product. The fusion product (e.g., the dissolvable reaction product) is dissolved off the component by the acid.

In some approaches, the acid may be used to weaken the dissolvable reaction product and, accordingly, may not fully strip the coating from the component. In such an approach, mechanical abrasion can be used to remove the weakened dissolvable reaction product from the component.

In some approaches, the acid is maintained at an elevated temperature to expedite the rate of dissolution. Lower temperatures may be used but may result in longer exposure times to achieve dissolution of the dissolvable reaction product. In some examples, the acid is maintained at a temperature of between about 25 degrees Celsius and about 100 degrees Celsius.

In some approaches, the dissolvable reaction product is contacted with the acid for an exposure time in the range of about 0.5 hours and about 15 hours, about 0.5 hours to about 10 hours, about 0.5 hours to about 5 hours, or about 0.5 hours to about 3 hours. The exposure time to dissolve the dissolvable reaction product may depend on several factors such as the volume of the coating being removed, a volume of the acid, a concentration of the acid, and/or a temperature of the acid.

In some examples, at block 130, the substrate, which includes the dissolvable reaction product is submerged in an acid bath to contact the dissolvable reaction product with the acid and dissolve the dissolvable reaction product. The acid bath may be agitated to expedite the rate of dissolution.

In some embodiments, after contacting at least a portion of the dissolvable reaction product with the acid, a portion of the coating may also be removed via mechanical abrasion. For example, converting the coating to the dissolvable reaction product and dissolving the dissolvable reaction product via the acid may weaken the coating such that it can be removed via mechanical abrasion. Any suitable method of mechanical abrasion can be used. Suitable methods of mechanical abrasion include, but are not limited to, grit blasting, ice blasting, or water jets. It is contemplated that, using such an approach, less aggressive forms of mechanical abrasion, such as grit blasting using walnut shells as the media, can be used to remove an EBC from a substrate as compared with mechanical abrasion used in traditional EBC removal approaches.

In some embodiments, after removing or stripping the coating from the substrate, the substrate can be recoated with at least one of a bond coat or another coating. Once the substrate is exposed, it can be recoated with minimal surface preparation. Whereas traditional mechanical approaches for coating removal such as grit blasting could damage or etch the surface of a component (e.g., the substrate to which the coating is applied), the chemical approaches described herein can remove the coating while leaving the underlying substrate largely undamaged and ready for recoating. In some embodiments, recoating the surface may include coating the substrate with the bond coat or a new coating.

To further illustrate the present disclosure, examples are given herein. It is to be understood that these examples are provided for illustrative purposes and are not to be construed as limiting the scope of the present disclosure.

### Examples

### Example 1

Coatings were removed from three coupons via a fusion-based coating removal process using a salt flux, specifically, potassium bisulfate (KHSO₄).

FIG. 2 shows the compositions of the three coupons (Coupon A, Coupon B, and Coupon C). The coupons were generally shaped as tiles having a generally square shape. Coupon A was made from an air spray plasma (APS) environmental barrier coating (EBC). In Coupon A, the EBC coating was free-standing and was not applied to a substrate. Coupon B was made from an EBC coated on a ceramic matrix composite (CMC) substrate. One side of Coupon B was coated with the EBC. Coupon C was made from an EBC coated on a CMC substrate. One side of Coupon C was coated with the EBC. Coupon C had calcium magnesium aluminosilicate (CMAS) melted on the EBC.

The same coating removal process was used for each coupon. The coating removal process started by contacting the coupons with the potassium bisulfate flux. The coupons were then subjected to a digestion process involving heating in a furnace and exposure to acid.

The coupons and potassium bisulfate flux were heated to a temperature of 600 degrees Celsius and held for a duration of 1 hour to form the dissolvable reaction product.

After heating the coupons with the potassium bisulfate flux, the coupons were subjected to a dissolution step using an aqueous solution of 10% by weight hydrochloric acid (HCl). The aqueous solution of HCl was maintained at a temperature of 120 degrees Celsius for a duration of 1 hour.

In Example 1, the dissolution step was carried out twice, each time the same with 1 hour of heating and 1 hour of exposure to the aqueous solution of HCl. After the heating and dissolution steps, the coupons were dried.

For Coupon A, a ratio of the salt flux to the EBC was 0.76 by weight.

For Coupons B and C, the ratio of the salt flux to the EBC was about 3.6 by weight.

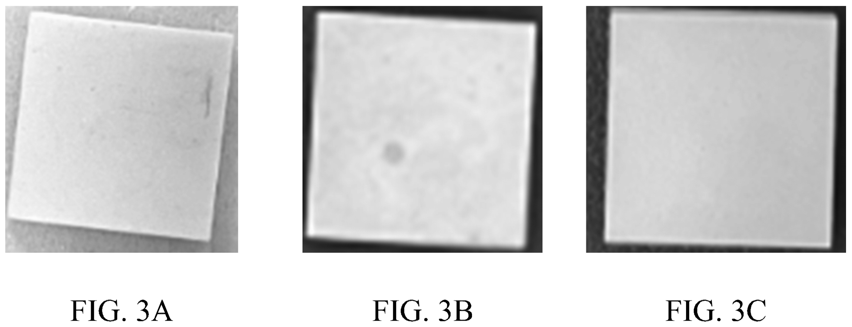

FIGS. 3A, 3B, and 3C are images from the coating removal process of Example 1. FIG. 3A shows Coupon A in its initial condition, before treatment via the salt flux and/or acid (e.g., aqueous solution of HCl). FIG. 3B shows Coupon A after the first full digestion process (e.g., 60 minutes in furnace + 60 minutes acid exposure). FIG. 3C shows Coupon A after the second full digestion process (e.g., 120 minutes total in furnace + 120 minutes total acid exposure). The appearance of coupon A in its initial condition may be similar to the appearance after the first and second full digestion process in the coating removal process of Example 1 as shown in FIGS. 3A-3C.

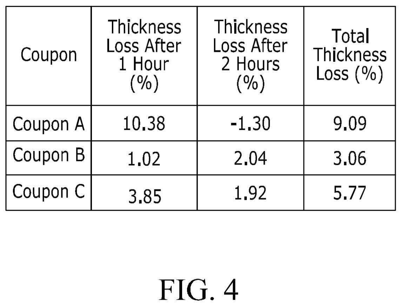

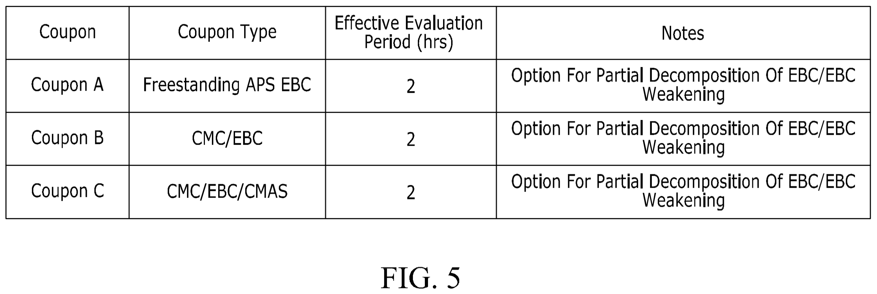

FIGS. 4 and 5 include experimental results from the coating removal process of Example 1.

During the coating removal process, Coupon A lost about 2.9% of its initial weight. Because Coupon A included EBC with no substrate, the weight loss of Coupon A is attributed to a loss of EBC. About 33% of the EBC was lost over the course of the 2-hour treatment process.

During the coating removal process, Coupon B lost about 4.7% of its initial weight.

During the coating removal process, Coupon C lost about 4.2% of its initial weight. It is believed that the thickness lost was attributed to EBC loss because, from visual inspection of the coupons, the underlying CMC substrate did not visually appear to be damaged.

The experimental coating removal process of Example 1 illustrates that the fusion-based coating removal process provides an option for at least partial decomposition of an EBC. Subsequent EBC weakening, for example via mechanical abrasion, could then be used to complete the coating removal process.

Further, Coupon A was comprised of a different EBC than Coupons B and C. Thus, Example 1 demonstrates that the process works on different EBC coatings, though, at different removal rates.

### Example 2

Coatings were removed from three coupons via a fusion-based coating removal process using a salt, specifically, lithium tetraborate (Li₂B₄O₇).

FIG. 5 shows the compositions of the three coupons (Coupon A, Coupon B, and Coupon C). Coupon A was made from an air spray plasma (APS) environmental barrier coating (EBC). In Coupon A, the EBC coating was free-standing and was not applied to a substrate. Coupon B was made from an EBC coated on a ceramic matrix composite (CMC) substrate. Coupon C was made from an EBC coated on a CMC substrate. Coupon C had calcium magnesium aluminosilicate (CMAS) deposited on the EBC.

The same coating removal process was used for each coupon. The coating removal process started by contacting the coupons with the lithium tetraborate flux. The coupons and lithium tetraborate flux were heated to a temperature of 1100 degrees Celsius for at duration of 4 hours to form the dissolvable reaction product..

After heating the coupons with the lithium tetraborate flux, the coupons were subject to a dissolution step using an aqueous solution of 20% by weight nitric acid (HNO₃). The aqueous solution of HNO₃ was maintained at a temperature of 90 degrees Celsius for a duration of about 5 hours. After the dissolution step, the coupons were dried.

For Coupon A, a ratio of the salt flux to the EBC was 0.70 by weight.

For Coupons B and C, the ratio of the salt flux to the EBC was about 3.6 by weight.

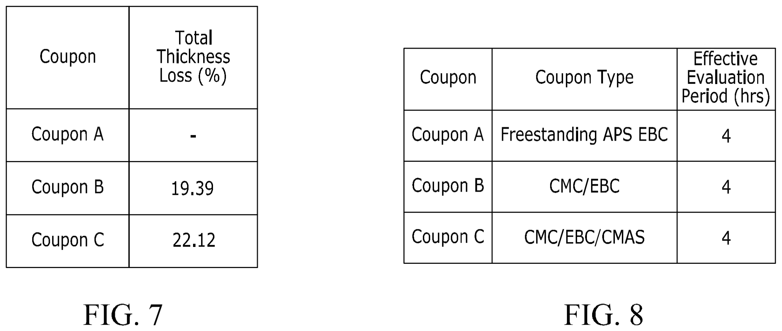

FIGS. 7 and 8 include experimental results from the coating removal process of Example 2.

During the coating removal process, Coupon A lost about 76% of its initial weight. Because Coupon A included EBC with no substrate, the weight loss of Coupon A is attributed to a loss of EBC. The EBC was not completely dissolved.

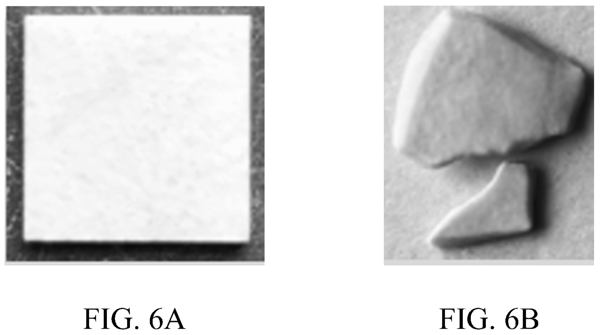

FIGS. 6A and 6B show images of Coupon A over the course of the coating removal process. FIG. 6A shows an image of Coupon A in its initial condition before the salt flux was applied and the coupon was exposed to the aqueous solution of HCl. FIG. 6B shows an image of Coupon A at the end of the coating removal process.

During the coating removal process, Coupon B lost about 34% of its initial weight.

During the coating removal process, Coupon C lost about 32% of its initial weight.

Notably, for Coupons B and C, complete dissolution of the EBC was observed in Example 2. In Example 2, upon visual observation, damage to the CMC was observed so some weight loss from Coupons B and C can be attributed to CMC loss.

### Example 3

Boric acid is applied to a ceramic matrix composite component having a TBC and the boric acid covered component is heated to a temperature of 350 degrees Celsius for 3 hours, resulting in a fusion reaction. The fusion reaction product is dissolved with a 10% aqueous solution of hydrochloric acid (HCl) in water by weight at 90 degrees Celsius for 2 hours. The experimental coating process of Example 3 illustrates that the fusion-based coating removal process provides an option for at least partial decomposition of a TBC with boric acid.

### Example 4

Potassium hydroxide (KOH) is applied to a ceramic matrix composite component having an EBC and the potassium hydroxide covered component is heated to a temperature of 600 degrees Celsius for 0.5 hours, resulting in a fusion reaction. The fusion reaction product is dissolved with a 15% aqueous solution of nitric acid (HNO₃) in water by weight at 85 degrees Celsius for 1.5 hours. The experimental coating process of Example 4 illustrates that the fusion-based coating removal process provides an option for at least partial decomposition of an EBC with potassium hydroxide (KOH).

### Example 5

Sodium peroxide (Na₂O₂) is applied to a ceramic matrix composite component having a TBC and the sodium peroxide covered component is heated to a temperature of 700 degrees Celsius for 2 hours, resulting in a fusion reaction. The fusion reaction product is dissolved with a 10% aqueous solution of hydrochloric acid (HCl) in water by weight at 90 degrees Celsius for 2 hours. The experimental coating process of Example 5 illustrates that the fusion-based coating removal process provides an option for at least partial decomposition of TBC with sodium peroxide (Na₂O₂).

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:

A method for removing a coating from a substrate, the method comprising: contacting the coating with a salt, the salt being a solid; heating the coating and the salt to a temperature at or above the melting point of the salt to convert the coating to a dissolvable reaction product by fusion of the coating with the salt; and dissolving the dissolvable reaction product using an acid to remove at least a portion of the coating from the substrate.

The method of any preceding clause, wherein the coating is an environmental barrier coating (EBC).

The method of any preceding clause, wherein the environmental barrier coating comprises a rare earth oxide.

The method of any preceding clause, wherein the substrate is a ceramic matrix composite.

The method of any preceding clause, wherein the salt includes at least one of sodium pyrosulfate (Na₂S₂O₇), potassium pyrosulfate (K₂S₂O₇), sodium bisulfate (NaHSO₄), potassium bisulfate (KHSO₄), sodium hydroxide (NaOH), potassium hydroxide (KOH), sodium carbonate (Na₂CO₃), potassium carbonates (K₂CO₃), sodium peroxide (Na₂O₂), boric acid (H₃BO₃), sodium tetraborate (Na₂B₄O₇), lithium tetraborate (Li₂B₄O₇), lithium metaborate (LiBO₂), ammonium bifluoride (NH₄HF₂), sodium fluoride (NaF), potassium fluoride (KF), or potassium bifluoride (KHF₂).

The method of any preceding clause, wherein the acid includes at least one of nitric acid or hydrochloric acid.

The method of any preceding clause, wherein the substrate is a component incorporated in at least one of a turbine, an aeroengine, an aerospace application, a hypersonic application, or a space application

The method of any preceding clause, wherein the salt is a particulate solid.

The method of any preceding clause, wherein a ratio of the salt to the coating is between about 6:1 and about 20:1 by weight.

The method of any preceding clause, wherein the coating is a thermal barrier coating.

The method of any preceding clause, wherein the acid is an aqueous solution having an acid concentration in the range of between about 5% and about 70%.

The method of any preceding clause, wherein contacting the coating with the salt includes contacting the coating with the salt at a temperature in the range of about 100 degrees Celsius to about 1650 degrees Celsius.

The method of any preceding clause, wherein heating the coating and the salt to the temperature at or above the melting point of the salt forms a molten salt that fuses with the coating.

The method of any preceding clause, wherein the salt forms a molten salt and contacting the coating with the molten salt fuses the coating with the molten salt.

The method of any preceding clause, wherein the method further includes: recoating a surface of the substrate with at least one of a bond coat or a new coating.

The method of any preceding clause, wherein the method further includes: removing at least a portion of the coating via mechanical abrasion after dissolving the dissolvable reaction product.

A method of removing an environmental barrier coating from a substrate, the method comprising fusing the environmental barrier coating with a solid salt to convert at least a portion of the environmental barrier coating to a dissolvable reaction product, and submerging the dissolvable reaction product in an acid bath to dissolve the dissolvable reaction product.

The method of any preceding clause, wherein the acid bath is maintained at a temperature of between about 25 degrees Celsius and about 100 degrees Celsius.

The method of any preceding clause, wherein the acid bath includes at least one of nitric acid or hydrochloric acid.

The method of any preceding clause, wherein fusing the environmental barrier coating with the solid salt includes covering the environmental barrier coating with the solid salt to form a coated environmental barrier coating and heating the coated environmental barrier coating to a temperature at or above the melting point of the solid salt.

## Claims

1. A method for removing a coating from a substrate, the method comprising:
contacting the coating with a salt, the salt being a solid (110);
heating the coating and the salt to a temperature at or above the melting point of the salt to convert the coating to a dissolvable reaction product by fusion of the coating with the salt (120); and
dissolving the dissolvable reaction product using an acid to remove at least a portion of the coating from the substrate (130).

2. The method of claim 1, wherein the coating is an environmental barrier coating (EBC).

3. The method of claim 2, wherein the environmental barrier coating comprises a rare earth oxide.

4. The method of any of claims 2 to 3, wherein the environmental barrier coating is at least one of an air plasma spray (APS) or a slurry-based EBC.

5. The method of any preceding claim, wherein the salt includes at least one of sodium pyrosulfate (Na₂S₂O₇), potassium pyrosulfate (K₂S₂O₇), sodium bisulfate (NaHSO₄), potassium bisulfate (KHSO₄), sodium hydroxide (NaOH), potassium hydroxide (KOH), sodium carbonate (Na₂CO₃), potassium carbonates (K₂CO₃), sodium peroxide (Na₂O₂), boric acid (H₃BO₃), sodium tetraborate (Na₂B₄O₇), lithium tetraborate (Li₂B₄O₇), lithium metaborate (LiBO₂), ammonium bifluoride (NH₄HF₂), sodium fluoride (NaF), potassium fluoride (KF), or potassium bifluoride (KHF₂).

6. The method of any preceding claim, wherein the acid includes at least one of nitric acid or hydrochloric acid.

7. The method of any preceding claim, wherein the substrate is a component of at least one of a turbine or an aeroengine.

8. The method of any preceding claim, wherein a ratio of the salt to the coating is between about 6:1 and about 20:1 by weight.

9. The method of any preceding claim, wherein heating the coating and the salt to the temperature at or above the melting point of the salt forms a molten salt that fuses with the coating.

10. The method of any preceding claim, wherein the method further includes:
recoating a surface of the substrate with at least one of a bond coat or a new coating.

11. The method of any preceding claim, wherein the method further includes:
removing at least a portion of the coating via mechanical abrasion after dissolving the dissolvable reaction product.

12. The method of any preceding claim, wherein the acid is an aqueous solution having an acid concentration in the range of between about 5% and about 70%.

13. The method of any preceding claim, wherein dissolving the dissolvable reaction product using an acid to remove at least a portion of the coating from the substrate (130) includes submerging the dissolvable reaction product in an acid bath to dissolve the dissolvable reaction product.

14. The method of claim 13, wherein the acid bath is maintained at a temperature of between about 25 degrees Celsius and about 100 degrees Celsius.

15. The method of claim 13, wherein the coating is an environmental barrier coating, wherein contacting the environmental barrier coating with a salt includes covering the environmental barrier coating with the salt to form a coated environmental barrier coating and heating the coated environmental barrier coating to a temperature at or above the melting point of the salt.
